# EUROPEAN PATENT APPLICATION

(11) **EP 3 597 409 A2**
(43) Date of publication of application: **22.01.2020**
(21) Application number: 18767806.5
(22) Date of filing: 23.03.2018
(51) Int. Cl.: B29C 70/08, B29C 53/60, B29C 70/36, F02K 1/58

(54) **METHOD FOR PRODUCING SECTIONS OF A THRUST REVERSER SUPPORTING GRID**

(30) Priority: 16.03.2017 RU 2017108683
(71) Applicant: Joint-Stock Company "United Engine Corporation" (JSC "EUC"), Moscow 105118 (RU)
(72) Inventor: GRINEV, Mikhail Anatol'evich, Perm' 614083 (RU); KOPYSOV, Dmitrij Vladislavovich, Perm' 614007 (RU); PASHKOVA, Mariya Yur'evna, Perm' 614010 (RU); RAZIN, Aleksandr Fedorovich, Moskovskaya obl. 141370 (RU); BARYNIN, Vyacheslav Aleksandrovich, Moskovskaya obl. 141372 (RU); KUL'KOV, Aleksandr Alekseevich, Moskovskaya obl. 141371 (RU); PASHUTOV, Arkadij Vital'evich, Pushkino Moskovskaya obl. 141207 (RU); TERESHONKOV, Mikhail Anatol'evich, Moskovskaya obl. 141370 (RU); ANTIPOV, Evgenij Alekseevich, Moskovskaya obl. 141370 (RU); ORLOV, Andrej Mikhajlovich, Moskovskaya obl. 141304 (RU); SINICYN, Roman Nikolaevich, Moskovskaya obl. 141308 (RU)
(74) Representative: Koudine, Andreï
(86) International application number: PCT/RU2018/000186
(87) International publication number: WO 2018/169453

(57) **Abstract**

The invention relates to the field of aeronautical engineering and can be used for the development and production of elements of the gas turbine engine of the aircraft. The technical task, the solution of which the invention is aimed at, is to create a high-tech design of sections of the cascade vanes of the aircraft thrust reverser with increased reliability of function thereof. The main features of the technical solution for the manufacture of sections of the aircraft carrier cascade vanes 1 of the thrust reverser made of polymer composite materials are that in the longitudinal 2 and transverse 3 grooves of the die-bar 4, the intersecting longitudinal and transverse layers of the ribs 6 and the blades 7 of the cascade vanes section 1 are wound. The grooves are made in the separation layer 12 of anti-adhesive elastic material to form the rows of pins 13 located between the grooves 2 for the ribs 6, divided in these rows by the grooves 3 for the blades 7 and reinforced with metal tow hooks 14. The tow hooks 14 are used in the form for the manufacture of an anti-adhesive elastic material of the separation layer 12 as the rows of pins 13. After the material is polymerized, the tow hooks 14 are removed along individual extraction trajectories and the pins 13 of the anti-adhesive elastic material are squeezed out of the cells of the cascade vanes 1, by folding them due to the elasticity into the space freed by the tow hooks 14.

## Description

The invention relates to the field of aeronautical engineering, in particular to the design of aircraft engines and braking devices of aircraft, and can be used for the development and production of elements of a gas turbine engine of an aircraft.

From the prior art, aircraft thrust reversers are known according to the book "Aviation gas turbine engines" M. M. Maslennikov, Yu. I. Shalman, M., "Mechanical Engineering," 1975, p. 457...461 (" 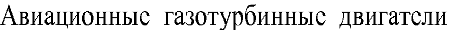 " M. M. 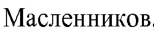 , 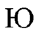 . 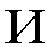 . 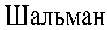 , M., " 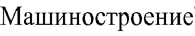 ", 1975 r., crp. 457...461).

Aircraft thrust reversers are known in accordance with patents RU 2069782 of 08/19/1992, France N A-2486 153, MPK7 F02K 1/56 (RU 2069782 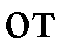 19.08.1992, 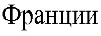 N A-2486 153, 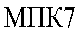 F02K 1/56).

Air-jet engines with a thrust reverser are known in accordance with patents RU 2232282 of 03/26/2003, US 5392991 A, 02/28/1995, DE 4200645 A1, 08/06/1992, MPK7 F02K 1/60.

Known are sections of the cascade vanes of an aircraft thrust reverse of the polymer composite materials and a method of their manufacture in accordance with patents RU No. 2363580 of 04/19/2005, EP 0916477 A1 of 05/19/1999, US 4596621 A of 06/24/986 MPK7 F02F 1/64.

Known are section of cascade vanes of aircraft elements of intersecting carbon fibers impregnated with a polymer binder, methods for their manufacture and equipment for implementing the method according to patents RU 2312790 of 06/14/2006, US 6464170 A of 03/07/2001, MPK7 B64C 1/00.

The closest to the technical solution claimed and taken as a prior art is a method of manufacturing sections of the carrier cascade vanes of an aircraft thrust reverser made of polymer composites, wherein in longitudinal and transverse grooves of a die-bar, longitudinal and the transverse layers of ribs and blades of a cascade vanes section are wound as a continuous harness of unidirectional, for example, carbon filaments impregnated with a polymeric binder, by hooking the harness to the pins when changing the winding direction, the grooves being of different sections, from the rectangle one for bearing end blades to c-shaped and curved, with varying degrees of curvature, drop-shaped for aerodynamic blades and ribs, with a depth commensurate with the distance between the grooves, with an undercut, also commensurate with this distance, performed in a separation layer of elastic adhesive material to form the rows of pins between the grooves for the edges, divided in these rows by the grooves for the blades and reinforced with metal tow hooks, which are inserted in a row-by-row manner in a base of the die-bar, by orienting thereof, for example, in the rectangular grooves of the base with legs, for example, of rectangular cross section, by fixing each leg of a tow hook in the base with a screw, after assembling the die-bar, winding of a section is carried out, by putting a harness for several passes into each longitudinal or transverse groove with the number of passes proportional to the current groove width for a layer of an appropriate level, wherein when laying the layer, the harnesses are compacted by caulking them in the transverse direction and by burying in the groove with a flexible flat caulking chisel, the remaining layers are similarly laid, after polymerization of material of a section of the cascade vanes the harnesses wrapped around pins are cut, screws of tow hooks legs are unscrewed, a structure along with a separating layer and tow hooks are removed from the die-bar base, tow hooks are removed along individual extraction paths, the cascade vanes rods of anti-adhesive elastic material are pressed out of the cells, by folding thereof due to elasticity in the space freed by the tow hooks, the technological allowances are removed, the surfaces of the ribs and blades are smoothed by removing the burr, wherein each row of pins is prefabricated in a form for pouring an anti-adhesive elastic material, which is made as a multi-section box with inner surfaces of side walls, according to a shape of a surface of a corresponding rib, divided by partitions, the cross sections of which are identical to the cross section of the respective blade, the form being assembled of sections of the channel-like section with beveled shelves to form a common bottom of the form from the walls of a channel, by setting the sections alternately in the guides, then into the grooves identical to the rectangular grooves of the die-bar made in the bottom of the sections, the tow hooks of the die-bar are inserted in the slots between the sections made according to the cross-sectional configuration of the appropriate partition at the ends of the beveled shelves, these partitions are inserted mainly parallel to the bottom across the shelves, the technological gaps are selected between the sections and partitions, by squeezing the latter within the guides using pressure screws, the cells between the beveled shelves and partitions are filled with the molding composition to form a monolithic structure of a row of pins due to flowing the composition into the gaps provided between partitions and the common bottom, then after polymerization of the adhesive elastic material, the pressure screws are loosened, the partitions are removed, the beveled shelves that are previously made removable are removed from one side, the monolithic row of pins with tow hooks are removed, wherein the rest of rows of the kit are made similarly; patent RU 2509649 of 03/20/2014.

A disadvantage of the common prior art and the prior art for the method is the low technological efficiency of manufacturing the sections of cascade vanes made of polymer composite materials, by the fastening of the ribs and blades with mutual sealing of their reinforcing fibers. The known method involves winding of fibers in the grooves made in the separation layer of an anti-adhesive elastic material. To ensure the well-known aerodynamic cascade vanes parameters, grooves of a known, different section are required, from a rectangular end blade to c-shaped and curved one, with varying degrees of curvature, drop-shaped for aerodynamic blades and ribs, having depths commensurate to a distance between the grooves, an undercut exceeding this distance. In this case, the most difficult is the operation on removing a separation layer from the cells of the cascade vanes. This separating layer, even made of highly elastic material (silicone rubber), is almost impossible to remove without destroying thereof. Forced destruction thereof is also very difficult due to the presence of the bends and undercuts thereof. A known operation on the winding of fibers is low-tech, because it does not provide for the optimal quality of stacking fibers in curved grooves of variable thicknesses. Another disadvantage is the low technological efficiency of the known method of manufacturing the separating layer in special forms that does not provide for the design of grooves of various sections of the required shape.

The set task aimed at achieving the technical result of the invention claimed is solved by the fact that the method of manufacturing sections of the carrier cascade vanes of the aircraft thrust reverser from polymer composites, wherein in the longitudinal and transverse grooves of the die-bar, intersecting longitudinal and transverse layers of the ribs and blades of the cascade vanes section are wound with the continuous harness from unidirectional, for example, carbon filaments impregnated with a polymeric binder, under tensioning pre-exposed on a creel, by hooking the harness to the pins mounted at a certain angle to the base of the die-bar and the axis of the ribs and blades when changing the direction of winding, the grooves being of various sections, from rectangular one for carrier end blades to c-shaped and curved ones, having varying degrees of curvature, cap-shaped for aerodynamic blades and ribs, with a depth commensurate with the distance between the grooves, with an undercut, also commensurate with this distance, performed in a separation layer of elastic adhesive material to form the rows of pins between the grooves for the edges, divided in these rows by the grooves for the blades and reinforced with metal tow hooks, which are inserted in a row-by-row manner in a base of the die-bar, by orienting thereof, for example, in the rectangular grooves of the base with legs, for example, of a rectangular cross section, by mounting each leg of a tow hook in the base with a screw, after assembling the die-bar, winding of a section is carried out, by putting a harness for several passes into each longitudinal or transverse groove with the number of passes proportional to the current groove width for a layer of an appropriate level, wherein when laying the layer, the harnesses are compacted by caulking them in the transverse direction and by burying in the groove with a flexible flat caulking chisel, the remaining layers are similarly laid, after polymerization of material of a section of the cascade vanes the harnesses wrapped around pins are cut, screws of tow hooks legs are unscrewed, a structure along with a separating layer and tow hooks are removed from the die-bar base, tow hooks are removed along individual extraction paths, the cascade vanes rods of anti-adhesive elastic material are pressed out of the cells, by folding thereof due to elasticity in the space freed by the tow hooks, the technological allowances are removed.

The technical result for the method that can be achieved by solving a technical task is to improve the technological efficiency of manufacturing the cascade vanes sections by reducing the laboriousness of the operation on removing the separation layer from the cascade vanes cells when the material is folded into the space freed by tow hooks (metal curved characters), by increasing technological efficiency of stacking fibers in curved grooves of variable thickness, as well as by improving the technological efficiency of the separation layer in special forms. In addition, the technical result is to increase the technological efficiency and simplify the assembly of the die-bar and prepare thereof for winding, as well as disassemble thereof.

A method of manufacturing sections of the carrier cascade vanes of the aircraft thrust reverser from polymer composites is as follows: in the longitudinal and transverse grooves of the die-bar, intersecting longitudinal and transverse layers of the ribs and blades of the cascade vanes section are wound with the continuous harness from unidirectional, for example, carbon filaments impregnated with a polymeric binder, under tensioning pre-exposed on a creel, by hooking the harness to the pins mounted at a certain angle to the base of the die-bar and the axis of the ribs and blades when changing the direction of winding, the grooves being of various sections, from rectangular one for carrier end blades to c-shaped and curved ones, having varying degrees of curvature, cap-shaped for aerodynamic blades and ribs, with a depth commensurate with the distance between the grooves, with an undercut, also commensurate with this distance, performed in a separation layer of elastic adhesive material to form the rows of pins between the grooves for the edges, divided in these rows by the grooves for the blades and reinforced with metal tow hooks, which are inserted in a row-by-row manner in a base of the die-bar, by orienting thereof, for example, in the rectangular grooves of the base with legs, for example, of a rectangular cross section, by mounting each leg of a tow hook in the base with a screw, after assembling the die-bar, winding of a section is carried out, by putting a harness for several passes into each longitudinal or transverse groove with the number of passes proportional to the current groove width for a layer of an appropriate level, wherein when laying the layer, the harnesses are compacted by caulking them in the transverse direction and by burying in the groove with a flexible flat caulking chisel, the remaining layers are similarly laid, after polymerization of material of a section of the cascade vanes the harnesses wrapped around the pins are cut, screws of tow hooks legs are unscrewed, a structure along with a separation layer and tow hooks are removed from the die-bar base, tow hooks are removed along individual extraction paths, the cascade vanes rods of anti-adhesive elastic material are pressed out of the cells, by folding thereof due to elasticity in the space freed by the tow hooks, the technological allowances are removed, the surfaces of the ribs and blades are smoothed by removing the burr, wherein each row of pins is prefabricated in a form for pouring an anti-adhesive elastic material, which is made as a multi-section box with inner surfaces of side walls, according to a shape of a surface of a corresponding rib, divided by partitions, the cross sections of which are identical to the cross section of the respective blade, the form being assembled of sections of the channel-like section with beveled shelves to form a common bottom of the form from the channel walls, by setting the sections alternately in the guides, then in the grooves identical to the rectangular die-bar grooves made in the bottom of the sections, the tow hooks of the die-bar are inserted in the slots between the sections made according to the cross-sectional configuration of the appropriate partition at the ends of the beveled shelves, these partitions are inserted mainly parallel to the bottom across the shelves, the cells between the beveled shelves and partitions are filled with a molded composition to form a monolithic pins row structure due to the flow of the composition into the gaps provided between the partitions and the common bottom, then after the polymerization of the adhesive elastic material, the monolithic row of pins with tow hooks are removed, while the remaining rows of the kit are made similarly.

Distinctive features of the method are as follows:
- grooves of various sections, from rectangular one for carrier end blades to c-shaped and curved ones, with varying degrees of curvature, drop-shaped for aerodynamic blades and ribs, with a depth commensurate to the distance between the grooves, with an undercut also commensurate with this distance, are performed in a separation layer from anti-adhesive elastic material - the features are essential, provide for the availability of new operations, a new sequence of their implementation and their new execution, aimed at solving the task set to achieve the technical result of reducing the complexity of the operation on removing the separation layer due to its low adhesion and elasticity (deformability), as well as improving the quality of the cascade vanes sections by ensuring aerodynamic characteristics thereof;
- forming rows of pins located between the grooves for the ribs, divided in these rows by the grooves for the blades and reinforced with metal tow hooks, which are inserted in a row-by-row manner in a base of the die-bar, by orienting thereof, for example, in the rectangular grooves of the base with legs, for example, of rectangular cross section, by fixing each leg of a tow hook in the base with a screw - the features are essential; provide for the availability of new operations, a new sequence of their implementation and their new execution, aimed at solving the task set to achieve the technical result to improve manufacturability and simplify assembly of the die-bar and preparation thereof for winding, and disassembly thereof, as well as improve the quality of the cascade vanes section by increasing the accuracy of location of the grooves;
- after assembling the die-bar, the section is wound by placing the harness for several passes into each longitudinal or transverse groove under a certain tension with a number of passes proportional to the current width of the groove for a layer of an appropriate level, by changing the direction of winding due to the hooking of the pins installed at certain angles to the base of the die-bar and the axes of the ribs and blades - the features are essential; provide for the availability of new operations, a new sequence of their implementation and their new execution, aimed at solving the task set to achieve the technical result to improve the technological efficiency of laying fibers in the curved grooves of variable thickness;
- when laying the layer, the harnesses are compacted by caulking them in the transverse direction and by burying in the groove with a flexible flat caulking chisel, the remaining layers are laid similarly - the features are essential; provide for the availability of new operations, a new sequence of their implementation and their new execution, aimed at solving the task set to achieve the technical result to improve the technological efficiency of laying fibers in the curved grooves of variable thickness, as well as improve the quality of the cascade vanes section by increasing the physicomechanical characteristics of the compacted material;
- after polymerization of material of the section of the cascade vanes, the harnesses wrapped around the pins are cut, screws of tow hooks legs are unscrewed, a structure along with a separation layer and the tow hooks are removed from the die-bar base - the features are essential; provide for the availability of new operations, a new sequence of their implementation and their new execution, aimed at solving the task set to achieve the technical result to improve the technological efficiency and simplify disassembly of the die-bar, as the tow hooks are removed along different individual trajectories;
- removing the tow hooks along individual extraction trajectories - the features are essential; provide for the availability of new operations, a new sequence of their implementation and their new execution, aimed at solving the task set to achieve the technical result to improve technological efficiency and simplify disassembly of the die-bar;
- squeezing out the pins made of the anti-adhesive elastic material from the cells of the cascade vanes, by folding thereof due to elasticity into the space freed by the tow hooks - the features are essential; provide for the availability of new operations, a new sequence of their implementation and their new execution, aimed at solving the task set to achieve the technical result to reduce the complexity of the operation on removing the separation layer from the cells of the cascade vanes.

These distinctive features are essential, since each individually and all together are aimed at solving the task set to achieve the technical results. The use of a single set of essential distinctive features in the known solutions was found that characterizes the compliance of the technical solutions with the "novelty" criterion.

A single set of new essential features along with common known ones provides for the solution of the task set to achieve the technical result and characterizes the proposed technical solution with significant differences compared to the background of the invention, analogues, and the prior art. This technical solution is the result of research and experimental work to improve the technological efficiency of the design of the thrust reverser of the aircraft with improved reliability of the function thereof without using known design solutions, recommendations, materials, and is not obvious, which indicates its compliance with the "inventive level" criterion.

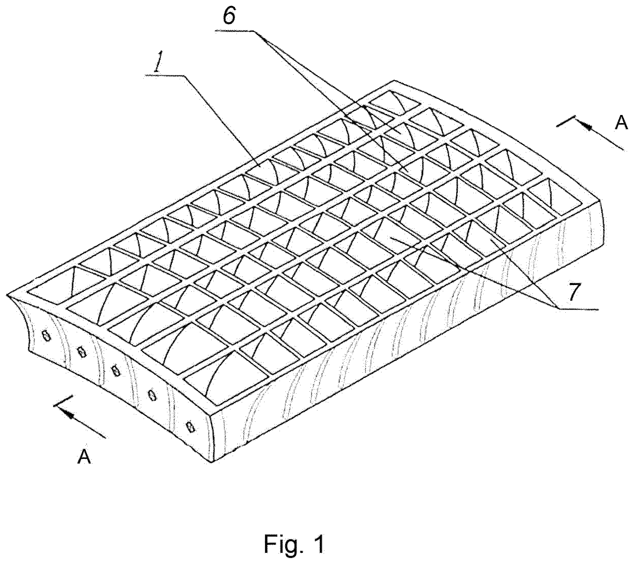

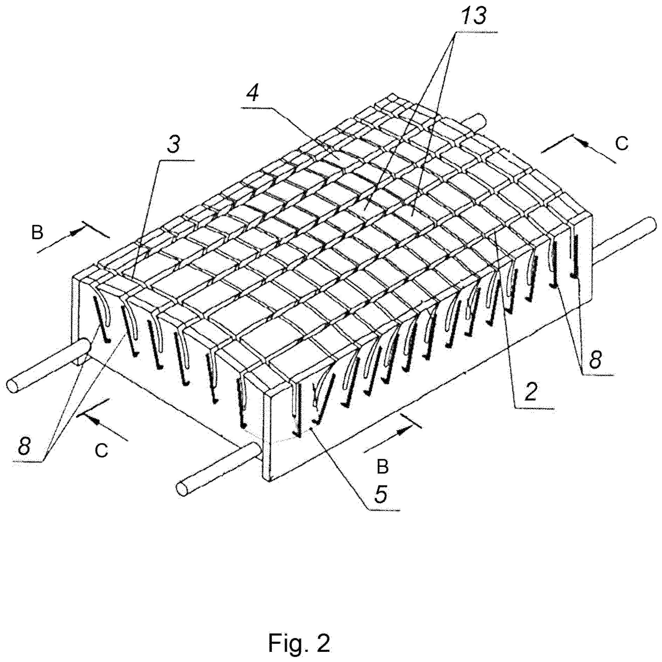

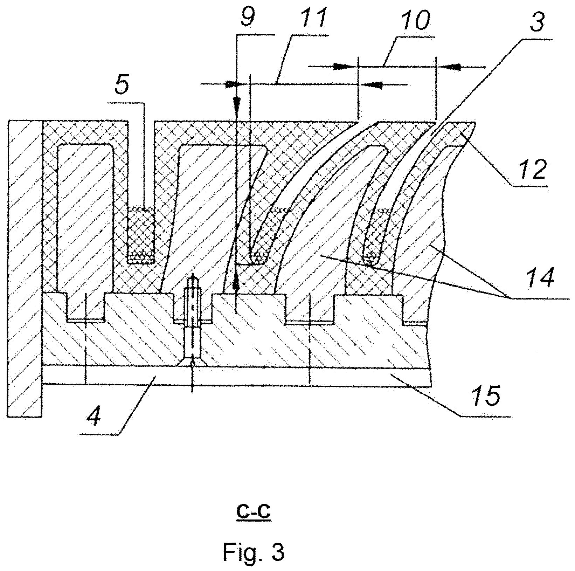

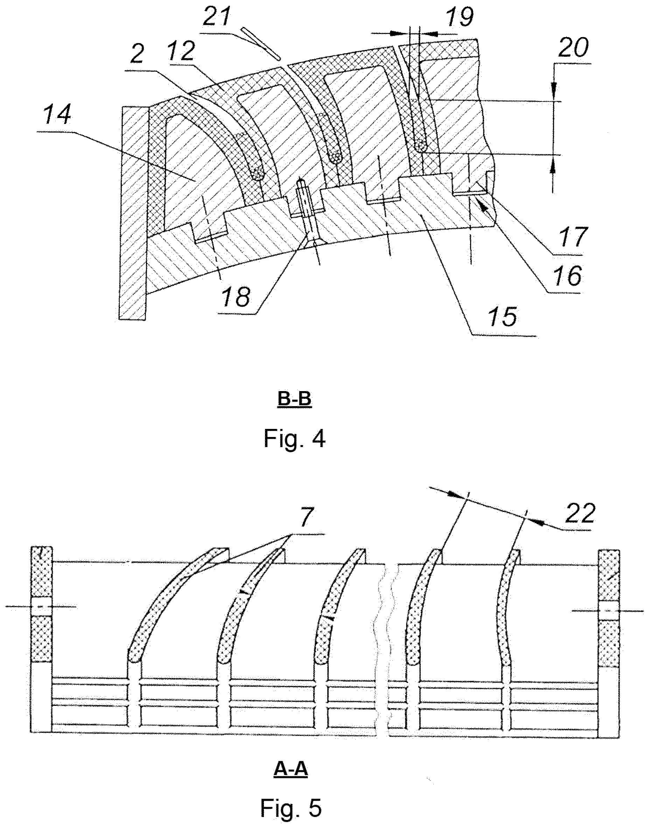

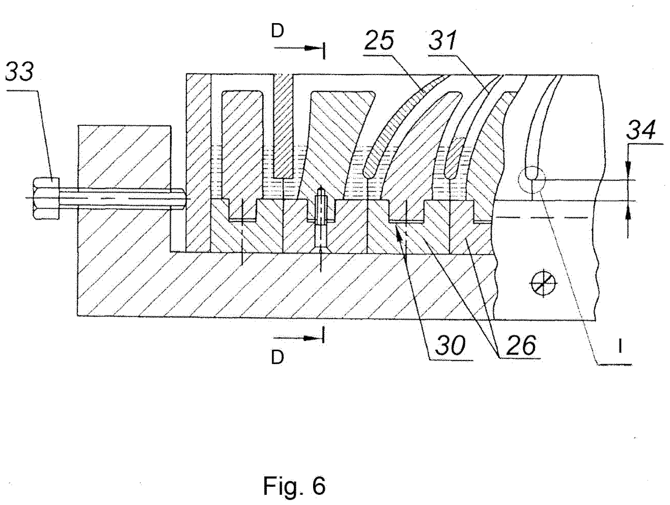

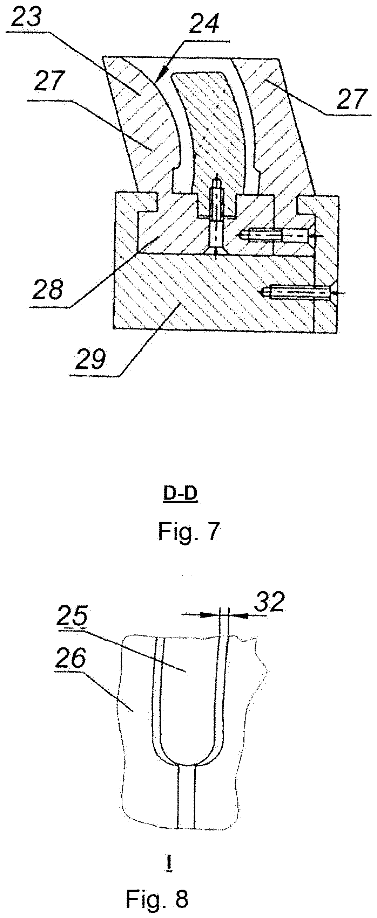

The invention essence is illustrated by drawings, where FIG. 1 is a general view of the section of the carrier cascade vanes, FIG. 2 is a general view of the die-bar, FIG. 3 is a longitudinal section of the die-bar, FIG. 4 is a cross-section of the die-bar, FIG. 5 is a longitudinal section of the cascade vanes section, FIG. 6 is a general view of the form for pouring the separation layer, FIG. 7 is a cross section of the form, and FIG. 8 is a view of the partition arrangement unit.

A method of manufacturing sections of the carrier cascade vanes 1 of the aircraft reverse reverser from polymer composite materials, wherein wounding, in the longitudinal 2 and transverse 3 grooves of the die-bar 4, intersecting longitudinal and the transverse layers of ribs 6 and blades 7 of a cascade vanes section 1 as a continuous harness 5 from unidirectional, for example, carbon filaments impregnated with a polymeric binder, under a certain tension previously set on the creel, by hooking the harness 5 to the pins 8 set at a determined angle to the base of the die-bar and an axis of the ribs and blades when changing the winding direction. The grooves 2, 3 have different section, from a rectangular one for the carrier end blades to c-shaped and curved ones, with varying degrees of curvature, drop-shaped for aerodynamic blades and ribs, having the depth 9 commensurate with distance 10 between the grooves 2, 3, with the undercut 11 also proportionate to this distance 10, performing, in the separation layer 12 of the adhesive elastic material to form the rows of the pins 13 located between the grooves 2 for the ribs 6, divided in these rows by the grooves 3 for the blades 7 and reinforced with metal tow hooks 14, which are inserted in a row-by-row manner in the base 15 of the die-bar 4, by orienting them, for example, in the rectangular grooves 16 of the base 15 with the legs 17, for example, of a rectangular cross-section, by securing each leg 17 of the tow hook 14 at the base 15 with a screw 18. After assembling the die-bar 4, winding the section 1, by putting the harness 5 in several passes into each longitudinal 2 or transverse 3 groove with the number of passes proportional to the current width 19 of the groove 2, 3 for a layer of an appropriate level 20. When laying the layer, compacting the harnesses, by caulking them in the transverse direction and by burying in the groove with the flexible flat caulking chisel 21. The remaining layers are similarly laid. After the material of the cascade vanes section 1 has been polymerized, cutting the harnesses 5 wrapped around the pins 8, unscrewing the screws 18 of the legs 17 of the tow hooks 14, removing the design along with the release layer 12 and the tow hooks 14 from the base 15 of the die-bar 4. Removing the tow hooks 14 along individual extraction trajectories, squeezing, out of the cells 22 cascade vanes section 1, the pins 13 of anti-adhesive elastic material, by folding them due to elasticity in the space freed by the tow hooks 14, removing the technological allowances, smoothing the surfaces of the ribs 6 and the blades 7, by removing the burr; wherein each row of the pins 13 is pre-made in the form 23 for pouring the anti-adhesive elastic material 12, which is configured as a multi-section box with inner surfaces 24 of the side walls, according to the shape of the surface of a corresponding edge 6, separated by partitions 25 with a cross section identical to the section of a corresponding blade 7. The form 23 being assembled from sections 26 of channel-shaped section with beveled shelves 27 to form a common bottom from channel walls 28, by setting sections 26 alternately in guides 29. Then in the grooves 30 identical to the rectangular grooves 16 of the die-bar 4 made in the bottom of the sections 26, inserting the tow hooks 14 of the die-bar 4, in slots 31 between the sections made according to the configuration of the cross section of a corresponding partition 25 on the ends of the beveled shelves, inserting these partitions 25 mainly parallel to the bottom across the shelves. Choosing technological gaps 32 between the sections 26 and the partitions 25, by compressing the latter in the guides 29 using pressure screws 33. Filling the cells between the beveled shelves 27 and the partitions 25 with a molding composition to form a monolithic structure of a row of the pins 13 due to wicking of the composition in gaps 34 provided between the partitions 25 and the common bottom. After polymerization of the anti-adhesive elastic material, loosening the pressure screws 33, removing the partitions 25, removing the beveled shelves 27, which are previously configured as removable, from one of the sides, and removing the monolithic row of the pins 13 with tow hooks 14. The other rows of the kit are made similarly.

Thus, the use of the invention will allow to create a high-tech design of the sections of the cascade vanes of the aircraft thrust reverser with increased reliability, which confirms the use of the invention for its intended purpose. The feasibility of the invention is confirmed by the positive results of testing samples and structural fragments, the development and manufacture of which is completely based on the description presented. In this regard, the new technical solution meets the criterion of "industrial applicability," i.e., the background of the invention.

## Claims

1. A method of manufacturing sections of the carrier cascade vanes of the aircraft reverse reverser from polymer composite materials, wherein wounding, in the longitudinal and transverse grooves of the die-bar, intersecting longitudinal and the transverse layers of ribs and blades of a cascade vanes section as a continuous harness from unidirectional, for example, carbon filaments impregnated with a polymeric binder, under a certain tension previously set on the creel, by hooking the harness to the pins set at a determined angle to the base of the die-bar and an axis of the ribs and blades when changing the winding direction; the grooves have different section, from a rectangular one for the carrier end blades to c-shaped and curved ones, with varying degrees of curvature, drop-shaped for aerodynamic blades and ribs, having the depth commensurate with distance between the grooves, with the undercut also proportionate to this distance, performing, in the separation layer of the adhesive elastic material to form the rows of the pins located between the grooves for the ribs, divided in these rows by the grooves for the blades and reinforced with metal tow hooks, which are inserted in a row-by-row manner in the base of the die-bar, by orienting them, for example, in the rectangular grooves of the base with the legs, for example, of a rectangular cross-section, by securing each leg of the tow hook at the base with a screw; after assembling the die-bar, winding the section, by putting the harness in several passes into each longitudinal or transverse groove with the number of passes proportional to the current width of the groove for a layer of an appropriate level; when laying the layer, compacting the harnesses, by caulking them in the transverse direction and by burying in the groove with the flexible flat caulking chisel; the remaining layers are similarly laid; after the material of the cascade vanes section has been polymerized, cutting the harnesses wrapped around the pins, unscrewing the screws of the legs of the tow hooks, removing the design along with the release layer and the tow hooks from the base of the die-bar; removing the tow hooks along individual extraction trajectories, squeezing, out of the cells cascade vanes section, the pins of anti-adhesive elastic material, by folding them due to elasticity in the space freed by the tow hooks, removing the technological allowances, smoothing the surfaces of the ribs 6 and the blades, by removing the burr; wherein each row of the pins is pre-made in the form for pouring the anti-adhesive elastic material, which is configured as a multi-section box with inner surfaces of the side walls, according to the shape of the surface of a corresponding edge, separated by partitions with a cross section identical to the section of a corresponding blade, the form being assembled from sections of channel-shaped section with beveled shelves to form a common bottom from channel walls, by setting sections alternately in guides; then, in the grooves identical to the rectangular grooves of the die-bar made in the bottom of the sections, inserting the tow hooks of the die-bar, in slots between the sections made according to the configuration of the cross section of a corresponding partition on the ends of the beveled shelves, inserting these partitions mainly parallel to the bottom across the shelves; choosing technological gaps between the sections and the partitions, by compressing the latter in the guides using pressure screws; filling the cells between the beveled shelves and the partitions with a molding composition to form a monolithic structure of a row of the pins due to wicking of the composition in gaps provided between the partitions and the common bottom; then after polymerization of the anti-adhesive elastic material, loosening the pressure screws, removing the partitions, removing the beveled shelves, which are previously configured as removable, from one of the sides, and removing the monolithic row of the pins with tow hooks, wherein the remaining rows of the kit are made similarly, wherein the harness is laid with the tension pre-installed on the creel, and the pins are set at an angle to the base of the die-bar and the axes of the ribs and blades.
